**Europäisches Patentamt**

**European Patent Office**

**Office européen des brevets**

(11) Veröffentlichungsnummer: **0 096 104**
A1

# EUROPÄISCHE PATENTANMELDUNG

(21) Anmeldenummer: **82106797.2**

(22) Anmeldetag: **27.07.82**

(51) Int. Cl.³: **C 21 D 1/76**
**B 01 J 19/14**

(30) Priorität: **14.06.82 DE 3222322**

(43) Veröffentlichungstag der Anmeldung:
**21.12.83 Patentblatt 83/51**

(84) Benannte Vertragsstaaten:
**AT BE CH DE FR GB LI NL**

(71) Anmelder: **Linde Aktiengesellschaft**
**Abraham-Lincoln-Strasse 21**
**D-6200 Wiesbaden(DE)**

(72) Erfinder: **Danzer, Wolfgang, Dr.chem.**
**Rue Alexander Dumas 1000 Appo. 47**
**Cep. 04718 Sao Paulo(BR)**

(74) Vertreter: **Schaefer, Gerhard, Dr.**
**Linde Aktiengesellschaft Zentrale Patentabteilung**
**D-8023 Höllriegelskreuth(DE)**

(54) Verfahren zum Herstellen einer Stickstoff und Wasserstoff enthaltenden Gasatmosphäre.

(57) Die Erfindung betrifft ein Verfahren zum Herstellen einer Stickstoff und Wasserstoff enthaltenden Gasatmosphäre für die Wärmebehandlung von Werkstücken in einem Ofen. Um eine Gasatmosphäre für eine nicht aufkohlende Wärmebehandlung aus Stickstoff und einem Alkohol bilden zu können, muß die Temperatur innerhalb des Ofens ausreichend hoch liegen und muß die Verweilzeit des Alkohols im Ofen groß sein. Um auf einfache und wirtschaftliche Weise eine zum entkohlenden und kohlungsneutralen Glühen von Werkstücken geeignete Gasatmosphäre herstellen zu können, wird vorgeschlagen, eine Teilmenge des in einem weiteren Ofen (1) aus einer aufkohlend, kohlungsneutral, nitrierend oder carbonitrierend wirkenden Gasatmosphäre gebildeten, wasserstoffhaltigen Abgases aus diesem Ofen abzuziehen (über 9) und zusammen mit einem inerten Gas (über 7) in den Ofen (4) für die Wärmebehandlung von Werkstücken einzuleiten.

EP 0 096 104 A1

## Verfahren zum Herstellen einer Stickstoff und Wasserstoff enthaltenden Gasatmosphäre

Die Erfindung betrifft ein Verfahren und eine Vorrichtung zum Herstellen einer Stickstoff und Wasserstoff enthaltenden Gasatmosphäre für die Wärmebehandlung von Werkstücken in einem Ofen.

Unter Wärmebehandlung ist beispielsweise das kohlungsneutrale Glühen, das Entkohlen, das Anlassen, das Spannungsarmglühen oder das Entfestigungsglühen zu verstehen. Es ist bekannt, eine Gasatmosphäre für eine nichtaufkohlende, oxidationsfreie Wärmebehandlung in Gasgeneratoren herzustellen. Dieses sogenannte Exogas wird durch Teilverbrennung von Kohlenwasserstoffen oder kohlenwasserstoffhaltigen Brenngasen mit Luft gebildet. Die Zusammensetzung des Exogases kann durch die Zusammensetzung des Ausgangsgases sowie durch das eingestellte Gas-Luft-Verbrennungsverhältnis innerhalb bestimmter Grenzen beeinflußt werden. Das bei der Verbrennung gebildete Gas wird gekühlt, um den größten Teil des bei der Verbrennung entstandenen Wasserdampfes als Kondensat ableiten zu können. Gegebenenfalls sind Sauerstoff- und/oder Schwefelentferner erforderlich.

Bei einem anderen Verfahren, dem Fertiggasverfahren, erübrigt sich der Einsatz separater Gasgeneratoren, wodurch Investitions-, Wartungs-, Energie- und Kühlmittelkosten entfallen.

Bei diesem Verfahren wird die Gasatmosphäre durch Mischen der Einzelkomponenten (z.B. Stickstoff, Kohlenmonoxid, Wasserstoff) synthetisch hergestellt. Kohlenmonoxid und Wasserstoff können hierbei beispielsweise erst im Ofen durch thermischen Zerfall eines Alkohols gebildet werden.

Das zuletzt genannte Verfahren besitzt jedoch einen Nachteil: Zur Herstellung einer Gasatmosphäre für eine nichtaufkohlende Wärmebehandlung aus Stickstoff und einem Alkohol müssen zwei Bedingungen erfüllt sein: Einerseits muß die Temperatur innerhalb des Ofens ausreichend hoch liegen, andererseits muß die Verweilzeit des Alkohols im Ofen groß sein. Ist eine der beiden Bedingungen nicht erfüllt, so versagt das Fertiggasverfahren, da eine gute Aufspaltung des Alkohols im Ofen nicht erreicht werden kann.

Konnten bisher die beiden angegebenen Bedingungen nicht eingehalten werden, mußte entweder auf den Einsatz eines Exogasgenerators zurückgegriffen werden oder dem Stickstoff mußte Wasserstoff aus einem Wasserstoffspeicher zugemischt werden. Die Zumischung von Wasserstoff ist aber relativ teuer.

Der Erfindung liegt daher die Aufgabe zugrunde, ein Verfahren der eingangs genannten Art anzugeben, mit dem auf einfache und wirtschaftliche Weise eine zum entkohlenden oder kohlungsneutralen Glühen von Werkstücken geeignete Gasatmosphäre hergestellt werden kann.

Diese Aufgabe wird erfindungsgemäß dadurch gelöst, daß eine Teilmenge des in einem weiteren Ofen auf einer aufkohlend, kohlungsneutral, nitrierend oder carbonitrierend wirkenden Gasatmosphäre gebildeten, wasserstoffhaltigen Abgases aus diesem Ofen abgezogen und zusammen mit einem inerten Gas in den Ofen für die Wärmebehandlung von Werkstücken eingeleitet wird.

Existiert z.B. in einem Wärmebehandlungsbetrieb ein Ofen, in dem mit einem bestimmten Kohlenstoff-Potential gearbeitet wird, in dem also Werkstücke einer aufkohlend oder kohlungsneutral wirkenden Gasatmosphäre ausgesetzt werden, so bildet sich während der Wärmebehandlung dieser Werkstücke ein Abgas, das einen bestimmten Gehalt an Wasserstoff besitzt. Dem erfindungsgemäßen Verfahren liegt nun die Erkenntnis zugrunde, daß dieses wasserstoffhaltige Gas mit Vorteil in einen weiteren Ofen zusammen mit einem inerten Gas wie Stickstoff eingeführt werden kann, um dort eine das Inertgas und Wasserstoff enthaltende Gasatmosphäre für die entkohlende oder kohlungsneutrale Wärmebehandlung von Werkstücken zu bilden. Hierbei hat es sich nach einer Ausgestaltung des Erfindungsgedankens als vorteilhaft erwiesen, wenn das Abgas vor dem Eintritt in den Ofen für die Wärmebehandlung der Werkstücke mit dem inerten Gas vermischt wird. Wurde bisher das aus einer kohlungsaktiven, bzw. nitrierend oder carbonitrierend wirkenden Gasatmosphäre gebildete Abgas in Fackeln nutzlos verbrannt, so wird dieses Abgas erfindungsgemäß genutzt: Dazu wird dem Ofen mit der kohlungsaktiven, nitrierend bzw. carbonitrierend wirkenden Atmosphäre Abgas in einer Menge entnommen, durch die weder die Gaszusammensetzung des Ofens wesentlich verändert noch der Gasdruck im Ofeninnenraum spürbar gesenkt wird, die aber ausreicht, den Wasserstoffgehalt in dem Ofen für die entkohlende oder kohlungsneutrale Wärmebehandlung auf den gewünschten Wert zu heben. Das wasserstoffhaltige Abgas wird, nachdem es dem Abgas liefernden Ofen entnommen worden ist, einem Inertgasstrom, vorzugsweise einem Stickstoff-Strom zugemischt und in den Bestimmungsofen eingeleitet. Der das Abgas liefernde Ofen mit einer kohlungsaktiven oder nitrierend bzw. carbonitrierend wirkenden Gasatmosphäre wirkt quasi als Gasgenerator für den zur entkohlenden oder kohlungsneutralen Wärmebehandlung dienenden Ofen. Je nach Größe des das Abgas liefernden Ofens können auch mehrere Öfen mit wasserstoffhaltigem Abgas versorgt werden.

Das erfindungsgemäße Verfahren besitzt nun gegenüber bekannten Verfahren den entscheidenden Vorteil, daß der als Schutzgaskomponente erforderliche Wasserstoffanteil weder in einem eigenen Gasgenerator gebildet noch als Einzelkomponente gespeichert und dem Ofen zugeführt werden muß. Das erfindungsgemäße Verfahren führt zu einer nicht unerheblichen Energieeinsparung und gestattet die Verwertung von Abgasen aus Industrieöfen. Da das wasserstoffhaltige Abgas ohnehin zur Verfügung steht, sobald ein Ofen mit einer kohlungsaktiven, bzw. einer nitrierend oder carbonitrierend wirkenden Gasatmosphäre vorhanden ist, kann die Schutzgasatmosphäre für die entkohlende bzw. kohlungsneutrale Wärmebehandlung von Werkstücken auf wirtschaftliche und einfache Weise gebildet werden. Insbesondere ist es nun möglich, auch kleine Öfen, oder Öfen mit einer Betriebstemperatur unter 850 °C, also Öfen, in denen bisher keine Gasatmosphären durch Einleiten von Stickstoff und einem Alkohol gebildet werden konnten, ohne Schutzgasgenerator zu versorgen. Darüber hinaus führt das erfindungsgemäße Verfahren aufgrund des Inertgasanteils im Abgas zu einer Verringerung des Inertgasbedarfs für die kohlungsneutrale bzw. entkohlende Wärmebehandlung.

In einer bevorzugten Ausgestaltung der Erfindung, in der die dem Inertgasstrom zuzumischende Abgasmenge leicht geregelt werden kann, wird das Abgas mittels Verdichter aus dem das Gas liefernden Ofen abgezogen und dem Inertgasstrom zugemischt. In gleicher Weise vorteilhaft hat sich die Verwendung eines Venturi-Rohres erwiesen. Dabei wird das wasserstoffhaltige Abgas durch den Inertgasstrom injektorartig angesaugt.

Als besonders vorteilhaft hat sich folgende Variante des erfindungsgemäßen Verfahrens erwiesen: Ein Teil des abgezogenen Abgases wird erneut in den das Abgas liefernden Ofen eingeleitet. Da das Abgas einer kohlungsaktiven Gasatmosphäre z.B. neben einem Wasserstoffanteil auch einen Kohlenmonoxidanteil enthält, führt diese Maßnahme dazu, daß der Kohlenmonoxid- und Wasserstoffanteil in dem das Abgas liefernden Ofen erhöht wird. Hierdurch wird die Kohlungskapazität dieses Ofens erhöht und somit die Gefahr der Weichfleckigkeit behandelter Werkstücke gemindert bzw. ausgeschaltet. Darüber hinaus wird mit Vorteil aber auch die Zusammensetzung des dem Ofen entnommenen Abgases in Richtung eines höheren Wasserstoffgehaltes verändert.

Eine vorteilhafte Vorrichtung zur Durchführung des Verfahrens besteht aus einem Wärmebehandlungsofen für die Wärmebehandlung von Werkstücken, in den einen Inertgasleitung mündet, sowie aus einem weiteren, ein wasserstoffhaltiges Abgas liefernden Ofen, sowie eine dessen Innenraum mit der Inertgasleitung verbindende Abgasleitung mit einer das Abgas in die Inertgasleitung einleitenden Fördervorrichtung für das Abgas.

Der schalttechnische Aufwand dieser Vorrichtung ist minimal. Insbesondere kann diese erfindungsgemäße Vorrichtung in jedem Wärmebehandlungsbetrieb, in dem sowohl ein Ofen für das Aufkohlen von Werkstücken als auch ein Ofen für das kohlungsneutrale Glühen oder Entkohlen, Anlassen usw. von Werkstücken vorhanden ist, rasch und ohne wesentliche Änderungen an bestehenden Anlagen sowie ohne langdauernde Unterbrechungen des Wärmebehandlungsbetriebs installiert werden.

Weitere vorteilhafte Ausgestaltungen der erfindungsgemäßen Vorrichtung sind in den Ansprüchen 6 und 7 angegeben.

Im Folgenden soll ein Ausführungsbeispiel anhand einer schematischen Zeichnung erläutert werden.

In einem Ofen 1 sollen metallische Werkstücke aufgekohlt werden. Dazu wird im Ofen 1 eine aufkohlend wirkende Gasatmosphäre durch Einleiten der Gaskomponenten, beispielsweise Stickstoff und ein Alkohol, in den Ofen gebildet. Die Gaskomponenten werden dem Ofen über eine Leitung 6 zugeführt. Die im Ofen 1 behandelten Werkstücke werden nach Verlassen des Ofens 1 in einem Ölbad 2 abgeschreckt und gegebenenfalls in einer Einrichtung 3 gewaschen.

Nachfolgend werden die Werkstücke in einen Ofen 4 gebracht, um dort angelassen zu werden. Die Gasatmosphäre des Ofens 4 wird über eine Leitung 10 in diesen Ofen geleitet. Leitung 10 wird durch eine Leitung 7 mit Stickstoff, der in einer Mischvorrichtung, beispielsweise einem Venturirohr, mit Ofenabgas aus Ofen 1 über eine Leitung 9 vermischt worden ist, gespeist.

In Ofen 1 werden beispielsweise pro Stunde 24 m³ Stickstoff und 21,5 l Methanol eingeleitet. Methanol spaltet bei der gegebenen Ofentemperatur von 880 ° in Kohlenmonoxid und Wasserstoff auf. Dies führt zu einer Gasatmosphäre, die ca. 20 Vol.-% Kohlenmonoxid, 40 Vol.-% Wasserstoff und 40 Vol.-% Stickstoff enthält. Wurde bisher das gesamte Abgas über eine Fackel 5 aus dem Ofen abgeleitet und verbrannt, so wird erfindungsgemäß ein Teil des Abgases aus Ofen 1 abgeleitet. Dieses Abgas enthält im wesentlichen Stickstoff sowie Anteile von Wasserstoff und Kohlenmonoxid. Dieses Abgas wird von einem in Leitung 7 unter einem Druck von ca. 4 bar und in einer Menge von 40 m³/h strömenden Stickstoffstrom in einem Venturirohr 8 angesaugt. Das Abgas wird dem Stickstoffstrom in

Form. 5729 7.78

0096104

einer Menge zugemischt, die zu einem Wasserstoffgehalt von ca. 2 bis 4 Vol.-% in dem in Leitung 10 strömenden Gasstrom führt. In dieser Zusammensetzung tritt das Gas in den bei ca. 660 °C betriebenen Ofen 4 ein.

Mit 11 ist eine Leitung bezeichnet, über die ein Teil des aus Ofen 1 abgezogenen Abgases erneut in Ofen 1 eingeleitet werden kann, um dort den Anteil von Kohlenmonoxid und Wasserstoff an der Gasatmosphäre zu erhöhen. Nicht dargestellt sind Vorrichtungen wie z.B. eine eigene Fördervorrichtung oder eine Rückschlagklappe in Leitung 11.

Zusammenfassend ist festzustellen, daß das erfindungsgemäße Verfahren einerseits die Verwertung von Industrieabgasen und andererseits auf einfache und wirtschaftliche Weise die Bildung einer Gasatmosphäre zum entkohlenden oder kohlungsneutralen Wärmebehandeln von Werkstücken ermöglicht.

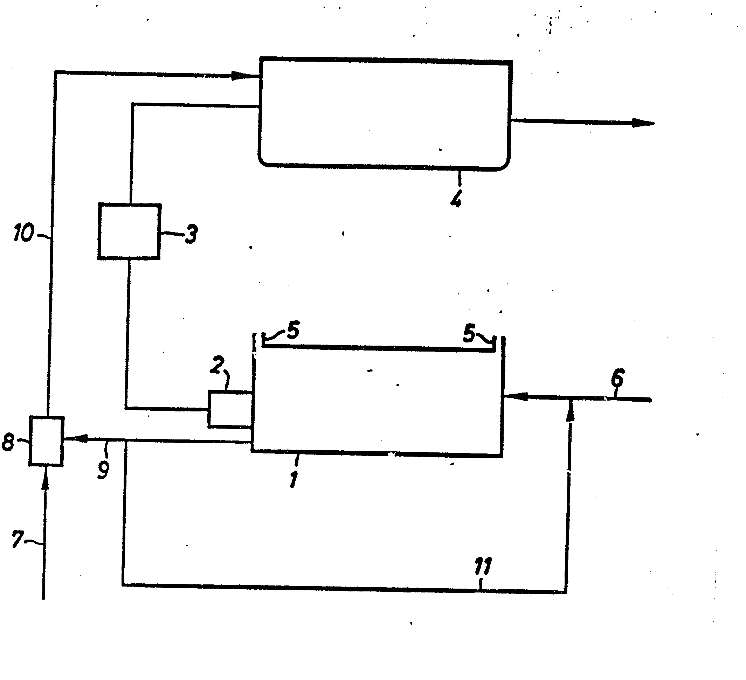

**Patentansprüche**

1. Verfahren zum Herstellen einer Stickstoff und Wasserstoff enthaltenden Gasatmosphäre für die Wärmebehandlung von Werkstücken in einem Ofen, dadurch gekennzeichnet, daß eine Teilmenge des in einem weiteren Ofen aus einer aufkohlend, kohlungsneutral, nitrierend oder carbonitrierend wirkenden Gasatmosphäre gebildeten, Wasserstoff enthaltenden Abgases aus diesem Ofen abgezogen und zusammen mit einem inerten Gas in den Ofen für die Wärmebehandlung von Werkstücken eingeleitet wird.

2. Verfahren nach Anspruch 1, dadurch gekennzeichnet, daß das Abgas vor dem Eintritt in den Ofen für die Wärmebehandlung mit dem inerten Gas vermischt wird.

3. Verfahren nach Anspruch 2, dadurch gekennzeichnet, daß das Abgas mittels Verdichter aus dem das Abgas liefernden Ofen abgezogen und dem Inertgasstrom zugemischt wird.

4. Verfahren nach Anspruch 2, dadurch gekennzeichnet, daß das Abgas über ein Venturirohr von dem Inertgasstrom angesaugt wird.

15. Verfahren nach einem der Ansprüche 1 bis 3, dadurch gekennzeichnet, daß ein Teil des abgezogenen Abgases erneut in den das Abgas liefernden Ofen eingeleitet wird.

56. Vorrichtung zur Durchführung des Verfahrens nach einem der Ansprüche 1 bis 5, mit einem Wärmebehandlungsofen für die Wärmebehandlung von Werkstücken, in den eine Inertgasleitung mündet, gekennzeichnet durch einen weiteren, ein wasserstoffhaltiges Abgas liefernden Ofen, sowie eine dessen Innenraum mit der Inertgasleitung verbindende Abgasleitung mit einer das Abgas in die Inertgasleitung einleitenden Fördervorrichtung für das Abgas.

7. Vorrichtung nach Anspruch 6, dadurch gekennzeichnet, daß die Fördervorrichtung ein Verdichter oder ein Venturirohr ist, durch das das Abgas vom Inertgasstrom angesaugt wird.

8. Vorrichtung nach einem der Ansprüche 6 oder 7, gekennzeichnet durch eine die Abgasleitung mit dem das Abgas liefernden Ofen verbindende Zweigleitung.

Europäisches
Patentamt

**EUROPÄISCHER RECHERCHENBERICHT**

Nummer der Anmeldung

EP 82 10 6797

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | BE-A- 593 133 (METALLURGIQUE D'ESPERANCE-LONGDOZ) <br> * Seite 3, Zeile 1 - Seite 4, Zeile 5; Seite 4, Zeile 40 - Seite 5, Zeile 15; Ansprüche 1,5,6; Abbildung * <br> --- | 1,2,5, 6,8 | C 21 D 1/76 <br> B 01 J 19/14 // <br> C 21 D 3/04 |
| A | GB-A-2 036 802 (BOC) <br><br> * Auszug * <br> --- | | |
| A | US-A-3 201 290 (U. WYSS) <br><br> ----- | | |

RECHERCHIERTE SACHGEBIETE (Int. Cl. ³)

B 01 J
C 21 D

Der vorliegende Recherchenbericht wurde für alle Patentansprüche erstellt.

| Recherchenort | Abschlußdatum der Recherche | Prüfer |
|---|---|---|
| DEN HAAG | 21-04-1983 | SIEM T.D. |